# FASCICULE DE BREVET EUROPEEN

(11) **EP 3 024 182 B1**
(45) Date de publication et mention de la délivrance du brevet: **15.05.2019**
(21) Numéro de dépôt: 15190672.4
(22) Date de dépôt: 20.10.2015
(51) Int. Cl.: H04L 12/58

(54) **PROCÉDÉ ET DISPOSITIF DE GESTION D'UN MESSAGE**
VERFAHREN UND VORRICHTUNG ZUR VERWALTUNG EINER NACHRICHT
METHOD AND DEVICE FOR MANAGING A MESSAGE

(30) Priorité: 24.11.2014 FR 1461343
(43) Date de publication de la demande: 25.05.2016
(73) Titulaire: Orange, 75015 Paris (FR)
(72) Inventeur: BOURGE, Fabrice, 14610 COLOMBY-SUR-THAON (FR); FROC, Benjamin, 14123 IFS (FR); LEPETIT, Olivier, 14800 DEAUVILLE (FR); BERTHOMIEU, Francis, 14000 CAEN (FR)
(74) Mandataire: Delumeau, François Guy

(56) Documents cités:
- EP-A1- 1 852 789
- WO-A2-01/09753
- US-A1- 2009 132 662

## Description

### Arrière-plan de l'invention

La présente invention se situe dans le domaine de la gestion des messages destinés à un utilisateur.

L'utilisation croissante des outils de communication temps réel ou quasi-temps réel dans un cadre professionnel (téléphonie fixe ou mobile, messagerie instantanée, SMS, e-mail) permet une fluidification des échanges d'information entre personnes. Cependant, l'immédiateté de ces échanges présente l'inconvénient d'interrompre l'utilisateur dans son activité courante, ce qui peut être préjudiciable à cette activité, en particulier si celle-ci requiert une certaine concentration.

De telles interruptions ou changements soudains d'activités peuvent être perturbants pour l'utilisateur selon sa concentration, son humeur, la nature de son travail, la fréquence des interruptions, etc., et en conséquence peuvent être néfastes au fonctionnement de l'entreprise. Les ressources cognitives pour passer de manière impromptue d'une activité à l'autre, et pour ensuite revenir à l'activité courante peuvent être très importantes.

A l'inverse, un appel ou un message ignoré peut laisser l'appelant/émetteur penser que l'utilisateur ne souhaite pas répondre personnellement, que le sujet du message n'est pas intéressant ou qu'il ne l'a pas reçu alors qu'en réalité et tout simplement ce dernier n'en a pas eu le temps. Ceci peut provoquer des projections psychologiques négatives chez l'appelant/émetteur. Une solution partielle à ce problème est divulguée, par exemple , dans le document WO 01/09753 A2.

L'invention propose un procédé et un dispositif de gestion des messages d'un utilisateur qui améliore cette situation, au moins dans une certaine mesure.

### Objet et résumé de l'invention

Plus précisément, l'invention concerne un procédé de gestion d'un message selon la revendication 1.

Corrélativement, l'invention concerne un dispositif de gestion de message selon la revendication 7.

L'invention s'applique à tout type de message, et notamment dans le contexte des outils de communication et de collaboration générant des messages texte ou vocaux, tels que IM, SMS, e-mail, téléphone fixe ou mobile.

D'une façon générale, l'invention propose de prendre en charge les messages reçus par un utilisateur et susceptibles de provoquer une interruption de son activité courante afin d'éviter que celui-ci soit, sur le champ, incité à s'engager dans une conversation ou réaliser tout autre type d'action, envoyer une réponse par exemple.

L'invention propose ainsi et en particulier à un collaborateur qui est en train de réaliser une ou plusieurs tâches demandant un effort de réflexion et de cognition important, de minimiser les interruptions résultant de sollicitations extérieures via les outils de communication et de collaboration. Cette gestion appropriée de l'interruption permet un traitement automatique ou semi-automatique de la demande associée à l'interruption en tenant compte à la fois de l'importance de cette demande et du caractère interruptible de l'utilisateur.

Dans un mode particulier de réalisation de l'invention, l'utilisateur est considéré interruptible (autrement dit disponible) ou non interruptible (ou non disponible) en fonction du résultat d'une comparaison dudit niveau d'interruptibilité estimé avec un premier seuil prédéfini.

Dans un mode particulier de réalisation, le procédé de gestion de message selon l'invention comporte une étape de présentation du premier message à l'utilisateur si l'utilisateur est considéré comme interruptible.

Dans un mode particulier de réalisation, le procédé de gestion de message selon l'invention comporte, si l'utilisateur est considéré non interruptible et si le niveau d'importance du premier message est supérieur à un deuxième seuil prédéfini :
- une étape de génération d'un deuxième message obtenu ou non à partir du premier message ; et
- une étape de présentation du deuxième message à l'utilisateur.

Ainsi, l'utilisateur n'est interrompu que si le premier message est considéré comme important. Le deuxième message présenté est par exemple une proposition de réponse au premier message ou un message prédéfini.

Dans un mode particulier de réalisation du procédé de gestion de message selon l'invention le deuxième message est une proposition de réponse au premier message destinée à être validée par l'utilisateur. Cette proposition de réponse comporte éventuellement tout ou partie dudit premier message.

La présentation d'une proposition de réponse au premier message permet à l'utilisateur de ne pas perdre de temps à composer une réponse. Elle lui permet également de choisir si une réponse formulée par le système de gestion doit être ou non être transmise par ce système.

Dans un mode particulier de réalisation, le procédé de gestion de message selon l'invention comporte, si l'utilisateur est considéré non interruptible et si le niveau d'importance du premier message est inférieur au deuxième seuil:
- une étape de génération d'une réponse au premier message ; et
- une étape d'envoi de cette réponse à l'émetteur du premier message cette réponse comportant éventuellement tout ou partie dudit premier message.

La réponse transmise est par exemple un message informant l'émetteur de la non disponibilité du destinataire et/ou comporte un délai dans lequel une réponse formulée par le destinataire devrait lui parvenir.

L'envoi d'une réponse à l'émetteur permet d'éviter les phénomènes de projections psychologiques que la non-réponse à un message peut induire.

Dans un mode particulier de réalisation, le procédé de gestion de message selon l'invention comporte une étape d'enregistrement du résultat des traitements effectués dans un tableau de bord. En particulier, les messages directement transmis à l'utilisateur, les réponses proposées à l'utilisateur pour approbation, les messages transmis à la messagerie vocale de l'utilisateur, les réponses envoyées à l'émetteur du message, ainsi que d'autres informations comme l'heure à laquelle les traitements ont été effectués, le niveau d'interruptiblité de l'utilisateur au moment de l'interception d'un message et le niveau d'importance d'un message peuvent être enregistrés dans le tableau de bord.

Dans un mode particulier de réalisation de l'invention, le niveau d'interruptibilité de l'utilisateur est déterminé en fonction d'au moins un paramètre choisi parmi la fréquence de frappe de l'utilisateur sur un clavier du terminal, les caractéristiques d'utilisation d'une souris du terminal, le nombre d'applications en cours d'exécution sur le terminal, le type du programme actif en premier plan du terminal, le statut d'une messagerie instantanée du terminal et le contenu d'un agenda du terminal.

Dans un mode particulier de réalisation, le niveau d'importance du premier message est déterminé à partir de l'analyse de son contenu, d'une caractéristique de l'émetteur, et/ou du nombre de premiers messages reçus dans un intervalle de temps prédéfini en provenance de l'émetteur. En particulier, si l'émetteur renvoie plusieurs fois le même premier message, son niveau d'importance peut augmenter.

Le dispositif de gestion de message selon l'invention implémente, dans des modes particuliers de réalisation, des moyens pour mettre en oeuvre les caractéristiques particulières du procédé de gestion mentionnées ci-dessus. En particulier, le dispositif de gestion de message selon l'invention peut comporter un ou plusieurs des modules ci-dessous, pris seuls ou en combinaison :
- un module pour comparer le niveau d'interruptibilité estimé pour l'utilisateur avec un premier seuil prédéfini et pour décider si l'utilisateur doit être considéré comme interruptible ou non interruptible en fonction d'un résultat de cette comparaison ;
- un module de présentation du premier message à l'utilisateur si l'utilisateur est considéré comme interruptible ;
- un module pour, si l'utilisateur est considéré non interruptible et si le niveau d'importance du premier message est supérieur à un deuxième seuil prédéfini, générer un deuxième message obtenu ou non à partir du premier message et présenter le deuxième message à l'utilisateur ;
- lorsque le deuxième message contient une proposition de réponse au premier message, un module pour obtenir une instruction de validation de l'utilisateur pour envoyer cette réponse ;
- un module pour, si l'utilisateur est considéré comme étant non interruptible et si le niveau d'importance du premier message est inférieur au deuxième seuil, générer une réponse au premier message et envoyer cette réponse à l'émetteur du premier message ;
- un module d'enregistrement du résultat des traitements effectués dans un tableau de bord.

Dans un mode particulier de réalisation, les différentes étapes du procédé de gestion de message sont déterminées par des instructions de programme d'ordinateur. En conséquence, l'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé de gestion de message tel que décrit ci-dessus.

Ce programme peut utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

Des caractéristiques et avantages particuliers de la présente invention ressortiront de la description détaillée faite aux figures dans lesquelles :
- la figure 1 représente, de façon schématique, l'architecture matérielle d'un dispositif de gestion de message selon l'invention ; et
- la figure 2 représente dans un scénario particulier de mise en oeuvre de l'invention, les principales étapes d'un procédé de gestion de message conforme à un mode particulier de réalisation;

### Description détaillée d'un mode de réalisation

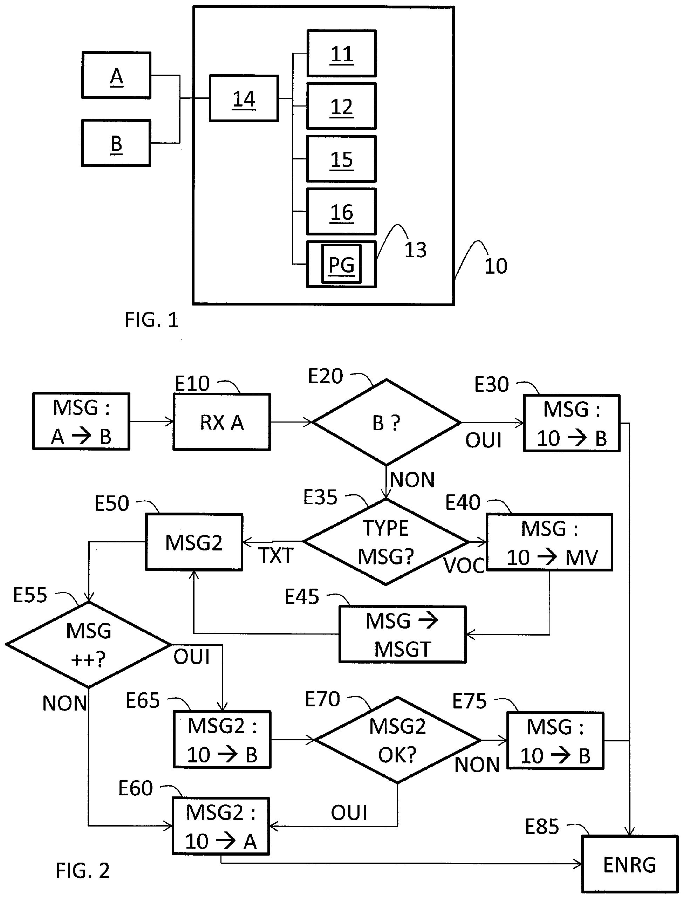

La figure 1 représente de façon schématique, l'architecture matérielle d'un dispositif 10 de gestion de message conforme à l'invention.

Le dispositif de gestion est apte à intercepter les messages envoyés par des équipements A (terminaux utilisateurs, serveurs, ...) à destination d'un terminal utilisateur B.

Dans une variante de réalisation de l'invention, le dispositif 10 pourrait être intégré dans le terminal B.

Dans le mode de réalisation décrit ici, le dispositif 10 comporte notamment un processeur 11, une mémoire morte 13, une mémoire vive 12, un module de communication 14 avec les terminaux A et B, un module 15 de reconnaissance automatique de la parole (en anglais Speech-To-Text) et une mémoire non volatile réinscriptible 16.

La mémoire morte 13 constitue un support d'enregistrement lisible par le processeur 11 et sur lequel est enregistré un programme PG d'ordinateur conforme à l'invention, comportant des instructions pour l'exécution des étapes d'un procédé de gestion de message conforme à l'invention, les principales étapes de ce procédé de gestion étant décrites ci-après en référence à la figure 2, dans un mode particulier de réalisation.

Ce programme d'ordinateur définit de façon équivalente des modules (logiciels) fonctionnels du dispositif de gestion de message 10, tels que notamment :
- un module pour comparer le niveau d'interruptibilité estimé pour l'utilisateur avec un premier seuil prédéfini et pour décider si l'utilisateur doit être considéré comme interruptible ou non interruptible en fonction d'un résultat de cette comparaison.
- un module de présentation du premier message à l'utilisateur si l'utilisateur est considéré comme interruptible ;
- un module pour, si l'utilisateur est considéré non interruptible et si le niveau d'importance du premier message est supérieur à un deuxième seuil prédéfini, générer un deuxième message obtenu ou non à partir du premier message et présenter le deuxième message à l'utilisateur ;
- lorsque le deuxième message contient une proposition de réponse au premier message, un module pour obtenir une instruction de validation de l'utilisateur pour envoyer cette réponse ;
- un module pour, si l'utilisateur est considéré comme étant non interruptible et si le niveau d'importance du premier message est inférieur au deuxième seuil, générer une réponse au premier message et envoyer cette réponse à l'émetteur du premier message ;
- un module d'enregistrement du résultat des traitements effectués dans un tableau de bord.

Les fonctions sont décrites plus en détail maintenant en référence aux étapes du procédé de gestion illustrées à la figure 2.

Nous supposons, en référence à la figure 2, que l'équipement A envoie un message MSG au terminal B.

Ce message est intercepté par le dispositif 10 au cours d'une étape E10. Si ce message MSG est un message vocal, il est, dans ce mode de réalisation, converti en texte pour traitement.

Au cours d'une étape E20, le dispositif 10 détermine si et dans quelle mesure, l'utilisateur du terminal B peut être interrompu dans une activité courante. Si l'utilisateur peut être interrompu, le dispositif 10 transmet le message intercepté à l'étape E10 au terminal B au cours d'une étape E30.

Si, au cours de l'étape E20, le dispositif 10 considère que l'utilisateur du terminal B ne doit pas être interrompu, le dispositif 10 détermine, au cours d'une étape E35, le type du message MSG.

Si le message est un message vocal, le dispositif 10 aiguille l'appel vers la messagerie vocale du terminal B au cours d'une étape E40.

Dans le mode de réalisation décrit ici où le dispositif 10 détermine, au cours de l'étape E35, que le message MSG est un message textuel, le dispositif 10 construit un deuxième message au sens de l'invention MSG2 à partir du message textuel MSG au cours d'une étape E50.

Dans le mode de réalisation décrit ici, ce deuxième message MSG2 est une réponse au message intercepté à l'étape E10, cette réponse pouvant contenir tout ou partie du premier message. En fonction de l'importance du premier message et comme décrit ci-après, cette réponse peut être envoyée directement à l'émetteur du premier message ou après validation, et éventuellement modification de l'utilisateur du terminal B.

Si le dispositif 10 détermine, au cours de l'étape E35, que le message MSG est un message vocal, le dispositif 10 transcrit le message vocal en un message textuel MSGT au cours de l'étape E45 puis construit le deuxième message MSG2 à partir de ce message textuel MSGT au cours de l'étape E50.

Au cours d'une étape E55, le dispositif 10 détermine le niveau d'importance du message MSG intercepté à l'étape E10. Si le dispositif 10 considère que le message MSG est suffisamment important pour que l'utilisateur du terminal B soit interrompu dans son activité courante, le dispositif 10 envoie le message MSG2 à l'utilisateur du terminal B au cours d'une étape E65 et demande à cet utilisateur du terminal B de valider si la proposition de réponse contenue dans le message MSG2 doit être envoyée ou non au terminal A.

Le dispositif 10 obtient la réponse de l'utilisateur du terminal B au cours d'une étape E70.

Si la réponse de l'utilisateur du terminal B est positive, le dispositif 10 envoie la proposition de réponse contenue dans le message MSG2 préparée à l'étape E50 au terminal A.

S'il est déterminé, à l'étape E55, que le message MSG n'est pas suffisamment important ou qu'il ne mérite pas de déranger l'utilisateur du terminal B, le dispositif 10 envoie la proposition de réponse contenue dans le message MSG2 directement au terminal A, au cours de l'étape E60, sans demander d'instruction explicite à ce sujet à l'utilisateur du terminal B. Ainsi, l'utilisateur du terminal B n'est pas interrompu.

Si, au cours de l'étape E70, l'utilisateur du terminal B répond négativement afin de ne pas valider la proposition de réponse contenue dans le message MSG2 proposé par le dispositif 10, le dispositif 10 transmet le message MSG intercepté à l'étape E10 au terminal B pour traitement par cet utilisateur B, au cours d'une étape E75.

Dans le mode de réalisation décrit ici, une absence de réponse au de l'utilisateur au cours de l'étape E70 est traitée, après une durée prédéterminée, comme une réponse négative.

Dans le mode de réalisation décrit ici, des informations relatives aux traitements effectués à l'étape E30, E60 ou E75 sont enregistrés dans un tableau de bord mémorisé dans la mémoire non volatile réinscriptible 16 au cours d'une étape E85.

Dans le mode de réalisation décrit ci-dessus, le caractère interruptible de l'utilisateur était binaire. Dans un autre mode de réalisation, le niveau d'interruptibilité de l'utilisateur peut prendre plus de deux valeurs, par exemple varier sur une échelle allant de 1 à 10. Les valeurs faibles peuvent par convention correspondre à une interruptibilité forte lorsque l'utilisateur est plutôt disponible et inversement les valeurs élevées correspondre à une interruptibilité réduite, lorsque l'utilisateur est plutôt non disponible. On peut par exemple définir un premier seuil sur cette première échelle, par exemple 5, au-dessus duquel on considère que l'utilisateur est non disponible.

De même, dans un mode particulier de réalisation, le niveau d'importance du premier message peut également varier sur une deuxième échelle, les valeurs faibles correspondant à un message de faible importance, et les valeurs élevées à un message important. On peut par exemple définir une échelle allant de 1 à 9, et un deuxième seuil sur cette deuxième échelle, par exemple 6, au-dessus duquel on considère que le message est suffisamment important pour interrompre l'utilisateur dans son activité courante.

Dans un mode particulier de réalisation, le niveau d'interruptibilité de l'utilisateur peut être déterminé en fonction d'au moins un paramètre choisi parmi la fréquence de frappe de l'utilisateur sur son clavier, les caractéristiques d'utilisation de la souris, le nombre d'applications en cours d'exécution sur le terminal, le type du programme actif en premier plan sur son terminal (navigateur Web, traitement de texte, ...), le statut d'une messagerie instantanée (ne pas déranger, ...), le contenu d'un agenda ....

On peut par exemple considérer que dès lors que le niveau d'interruptibilité est inférieur au premier seuil, l'utilisateur peut être interrompu, les messages interceptés par le mécanisme selon l'invention lui étant transmis directement.

Par exemple, si le premier seuil est fixé à 5, on peut décider que :
- le niveau d'interruptibilité de l'utilisateur est égal à 1,2 lorsque celui-ci n'utilise pas ou peu son clavier, ne bouge que très peu la souris, et que le seul programme actif sur le terminal est un navigateur web ;
- le niveau d'interruptibilité de l'utilisateur est égal à 7,9 lorsque le statut de sa messagerie instantanée est « ne pas déranger », l'application active est un traitement de texte, l'utilisation du clavier et de la souris est intensive.

Dans un mode particulier de réalisation, le niveau d'importance du premier message peut être déterminé à partir de l'analyse de son contenu, par exemple en fonction de la détection de mots clés (« urgent », « disponible », « prendre un café », « ? »...). Cette analyse peut également s'appuyer sur des outils d'analyse sémantique.

Le niveau d'importance du message peut également augmenter si celui-ci est répété ou s'il est consécutif à la réception d'autres messages précédents émanant du même émetteur et ayant une analogie avec ce message.

Dans un mode particulier de réalisation, lorsque l'utilisateur n'est pas interruptible, le procédé et le dispositif selon l'invention sont aptes à générer un message et à envoyer ce message :
- soit directement à l'émetteur du premier message ;
- soit à l'utilisateur du terminal destinataire du premier message pour approbation.

Ce deuxième message peut prendre la forme d'une notification. Il peut éventuellement être construit à partir du contenu du premier message, et éventuellement comprendre une information représentative d'un instant à partir duquel l'utilisateur est susceptible d'être disponible.

Par exemple, lorsque le dispositif 10 selon l'invention reçoit un message comprenant l'expression « Veux-tu prendre un café ? ». Le dispositif 10 peut consulter l'agenda de l'utilisateur et générer un message contenant: « Je serai disponible à partir de 11h pour prendre un café. »

D'une façon générale, les messages transmis à l'utilisateur du terminal B au cours des étapes E30, E65, E75 et à l'utilisateur du terminal A au cours de l'étape E60 et à la messagerie vocale au cours de l'étape E40 sont transmis dans un format compatible avec les terminaux, équipements ou applications auxquels ils sont destinés. Au besoin, ces messages sont vocalement synthétisés avant transmission.

## Revendications

1. Procédé de gestion d'un message comportant :
- une étape (E10) d'interception d'un premier message destiné à un dispositif d'un utilisateur ;
- une étape (E20) d'estimation d'un niveau dit « niveau d'interruptibilité de l'utilisateur » représentant dans quelle mesure ledit utilisateur peut être interrompu dans son activité courante, ledit premier message étant traité en fonction dudit niveau d'interruptibilité de l'utilisateur ;
le procédé étant **caractérisé en ce que** ledit utilisateur est considéré interruptible ou non interruptible en fonction du résultat d'une comparaison (E20) dudit niveau d'interruptibilité estimé avec un premier seuil ;
et **en ce que** le procédé comprend en outre :
- si ledit utilisateur est considéré comme interruptible, une étape (E30) de présentation dudit premier message audit utilisateur ;
- si ledit utilisateur est considéré non interruptible :
∘ une étape (E55) d'estimation d'un niveau d'importance dudit premier message ;
∘ si le niveau d'importance dudit premier message est inférieur à un deuxième seuil, une étape (E60) d'envoi d'une réponse audit premier message à l'émetteur dudit premier message, ladite réponse étant fonction du premier message ; et
∘ si le niveau d'importance dudit premier message est supérieur au deuxième seuil, une étape (E65) de présentation audit utilisateur (B) de la réponse (MSG2) dans un deuxième message.

2. Procédé de gestion selon la revendication 1, **caractérisé en ce que** le deuxième message comporte tout ou partie dudit premier message.

3. Procédé de gestion selon la revendication 2, caractérisé en ce, lors de l'étape (E65) de présentation de la réponse, la réponse contenue dans le deuxième message (MSG2) est présentée en tant que proposition de réponse audit premier message destinée à être validée (E70) par ledit utilisateur.

4. Procédé de gestion selon l'une quelconque des revendications 1 à 3, **caractérisé en ce qu'**il comporte une étape (E85) d'enregistrement du résultat desdits traitements dans un tableau de bord.

5. Procédé de gestion selon l'une quelconque des revendications 1 à 4, **caractérisé en ce que** ledit niveau d'importance dudit premier message est déterminé à partir de l'analyse de son contenu, d'une caractéristique de l'émetteur, et/ou du nombre de premiers messages reçus dans un intervalle de temps prédéfini en provenance de l'émetteur.

6. Procédé de gestion selon l'une quelconque des revendications 1 à 5, **caractérisé en ce que** le niveau d'interruptibilité de l'utilisateur est déterminé à partir de l'un au moins des paramètres suivants :
- une fréquence de frappe sur un clavier ;
- caractéristiques d'utilisation d'une souris ;
- un nombre d'applications en cours d'exécution sur le dispositif de l'utilisateur ;
- le type du programme actif en premier plan sur le dispositif de l'utilisateur ;
- un statut d'une messagerie instantanée ;
- le contenu d'un agenda.

7. Dispositif de gestion de message comportant :
- un module d'interception d'un premier message destiné au dispositif d'un utilisateur ;
- un module d'estimation d'un niveau dit « niveau d'interruptibilité de l'utilisateur » représentant dans quelle mesure ledit utilisateur peut être interrompu dans son activité courante ;
- un module de traitement dudit premier message en fonction dudit niveau d'interruptibilité de l'utilisateur ;
le dispositif de gestion étant **caractérisé en ce que** le module de traitement est configuré pour déterminer que ledit utilisateur est interruptible ou non interruptible en fonction du résultat d'une comparaison (E20) dudit niveau d'interruptibilité estimé avec un premier seuil, et pour présenter ledit premier message audit utilisateur si ledit utilisateur est considéré comme interruptible ;
- un module d'estimation d'un niveau d'importance configuré pour estimer un niveau d'importance dudit premier message si ledit utilisateur est considéré non interruptible ;
- un moyen d'envoi, mis en oeuvre si ledit utilisateur est considéré non interruptible, configuré pour :
∘ envoyer une réponse à l'émetteur dudit premier message si ledit niveau d'importance du premier message est inférieur à un deuxième seuil, ladite réponse étant fonction du premier message, et
∘ présenter audit utilisateur (B) la réponse (MSG2) dans un deuxième message, si le niveau d'importance dudit premier message est supérieur au deuxième seuil.

8. Programme d'ordinateur (PG) comportant des instructions pour l'exécution des étapes du procédé de gestion de message selon l'une quelconque des revendications 1 à 6 lorsque ledit programme est exécuté par ordinateur.

9. Support d'enregistrement (13) lisible par un ordinateur sur lequel est enregistré un programme d'ordinateur (PG) comprenant des instructions pour l'exécution des étapes du procédé de gestion de message selon l'une quelconque des revendications 1 à 6.

## Patentansprüche

1. Verfahren zur Nachrichtenverwaltung, umfassend:
- einen Schritt (E10) des Empfangens einer ersten Nachricht, die für eine Vorrichtung eines Nutzers bestimmt ist;
- einen Schritt (E20) des Schätzens eines Grades "Unterbrechbarkeitsgrad des Nutzers" genannt, der dafür steht, in welchem Maße der Nutzer bei seiner aktuellen Tätigkeit unterbrochen werden kann, wobei die erste Nachricht in Abhängigheit vom Unterbrechbarkeitsgrad des Nutzers verabeiter wird;
wobei das Verfahren **dadurch gekennzeichnet ist, dass** der Nutzer in Abhängigkeit vom Ergebnis eines Vergleichs (E20) des geschätzten Unterbrechbarkeitsgrades mit einem ersten Schwellenwert als unterbrechbar oder nicht unterbrechbar betrachtet wird;
und dadurch, dass das Verfahren ferner umfasst:
- wenn der Nutzer als unterbrechbar betrachtet wird, einen Schritt (E30), in dem die erste Nachricht dem Nutzer angezeigt wird;
- wenn der Nutzer als nicht unterbrechbar betrachtet wird:
o einen Schritt (E55) des Schätzens des Wichtigkeitsgrades der ersten Nachricht;
o wenn der Wichtigkeitsgrad der ersten Nachricht unter einem zweiten vorgegebenen Schwellenwert liegt, einen Schritt (E60) des Sendens einer Antwort auf die erste Nachricht an den Sender der ersten Nachricht, wobei die Antwort von der ersten Nachricht abhängig ist; und
o wenn der Wichtigkeitsgrad der ersten Nachricht über dem zweiten Schwellenwert liegt, einen Schritt (E65), in dem die Antwort (MSG2) dem Nutzer (B) in einer zweiten Nachricht angezeigt wird.

2. Verwaltungsverfahren nach Anspruch 1, **dadurch gekennzeichnet, dass** die zweite Nachricht die gesamte erste Nachricht oder einen Teil davon enthält.

3. Verwaltungsverfahren nach Anspruch 2, **dadurch gekennzeichnet, dass** im Schritt (E65) des Anzeigens der Antwort die in der zweiten Nachricht enthaltene Antwort (MSG2) als Antwortvorschlag auf die erste Nachricht angezeigt wird, die dazu bestimmt ist, vom Nutzer bestätigt (E70) zu werden.

4. Verwaltungsverfahren nach einem der Ansprüche 1 bis 3, **dadurch gekennzeichnet, dass** es einen Schritt (E85) des Speicherns des Ergebnisses der Verarbeitungen auf einer Übersichtsseite umfasst.

5. Verwaltungsverfahren nach einem der Ansprüche 1 bis 4, **dadurch gekennzeichnet, dass** der Wichtigkeitsgrad der ersten Nachricht ausgehend von der Analyse ihres Inhalts, einem Merkmal des Senders und/oder der Anzahl erster Nachrichten, die in einem vorgegebenen Zeitraum von dem Sender empfangen wurden, bestimmt wird.

6. Verwaltungsverfahren nach einem der Ansprüche 1 bis 5, **dadurch gekennzeichnet, dass** der Unterbrechbarkeitsgrad des Nutzers ausgehend von mindestens einem der folgenden Parameter bestimmt wird:
- einer Tippgeschwindigkeit auf einer Tastatur;
- Nutzungsmerkmalen einer Maus;
- der Anzahl der auf der Vorrichtung des Nutzers in Ausführung befindlichen Anwendungen;
- der Art des auf der Vorrichtung des Nutzers im Vordergrund aktiven Programms;
- einem Status einer Sofortnachrichtenübermittlung;
- dem Inhalt eines Terminplaners.

7. Vorrichtung zur Nachrichtenverwaltung, umfassend:
- ein Modul zum Empfangen einer ersten Nachricht, die für die Vorrichtung eines Nutzers bestimmt ist;
- ein Modul zum Schätzen eines Grades, "Unterbrechbarkeitsgrad des Nutzers" genannt, der dafür steht, in welchem Maße der Nutzer bei seiner aktuellen Tätigkeit unterbrochen werden kann;
- ein Modul zur Verarbeitung der ersten Nachricht in Abhängigkeit vom Unterbrechbarkeitsgrad des Nutzers;
wobei die Verwaltungsvorrichtung **dadurch gekennzeichnet ist, dass** das Verarbeitungsmodul dazu ausgebildet ist, in Abhängigkeit vom Ergebnis eines Vergleichs (E20) des geschätzten Unterbrechbarkeitsgrades mit einem ersten Schwellenwert zu bestimmen, ob der Nutzer unterbrechbar oder nicht unterbrechbar ist, und um dem Nutzer die erste Nachricht anzuzeigen, wenn der Nutzer als unterbrechbar betrachtet wird;
- ein Modul zum Schätzen eines Wichtigkeitsgrades, das dazu ausgebildet ist, einen Wichtigkeitsgrad der ersten Nachricht zu schätzen, wenn der Nutzer als nicht unterbrechbar betrachtet wird;
- ein Mittel zum Senden, das eingesetzt wird, wenn der Nutzer als nicht unterbrechbar betrachtet wird, das dazu ausgebildet ist:
- eine Antwort an den Sender der ersten Nachricht zu senden, wenn der Wichtigkeitsgrad der ersten Nachricht unter einem zweiten Schwellenwert liegt, wobei die Antwort von der ersten Nachricht abhängig ist, und
- dem Nutzer (B) die Antwort (MSG2) in einer zweiten Nachricht anzuzeigen, wenn der Wichtigkeitsgrad der ersten Nachricht über dem zweiten Schwellenwert liegt.

8. Computerprogramm (PG) mit Anweisungen zum Ausführen der Schritte des Verfahrens zur Nachrichtenverwaltung nach einem der Ansprüche 1 bis 6, wenn das Programm von einem Computer ausgeführt wird.

9. Computerlesbares Speichermedium (13), auf dem ein Computerprogramm (PG) gespeichert ist, das Anweisungen zum Ausführen der Schritte des Verfahrens zur Nachrichtenverwaltung nach einem der Ansprüche 1 bis 6 umfasst.

## Claims

1. Method of managing a message comprising:
- a step (E10) of intercepting a first message intended for a device of a user;
- a step (E20) of estimating a level termed "interruptibility level of the user" representing the extent to which said user can be interrupted in their current activity, said first message being processed as a function of said interruptibility level of the user;
the method being **characterized in that** said user is considered to be interruptible or non interruptible as a function of the result of a comparison (E20) of said estimated interruptibility level with a first threshold;
and **in that** the method furthermore comprises:
- if said user is considered to be interruptible, a step (E30) of presenting said first message to said user;
- if said user is considered to be non interruptible,
• a step (E55) of estimating a level of importance of said first message;
• if the importance level of said first message is less than a second threshold, a step (E60) of despatching a response to said first message to the sender of said first message, said response being dependent on the first message,
• if the importance level of said first message is greater than the second threshold, a step (E65) of presenting said user (B) with the response (MSG2) in a second message.

2. Method of management according to Claim 1, **characterized in that** the second message comprises all or part of said first message.

3. Method of management according to Claim 2, **characterized in that**, during step (E65) of presenting the response, the response contained in the second message (MSG2) is presented as a proposal of response to said first message, which proposal is intended to be validated (E70) by said user.

4. Method of management according to one of Claims 1 to 3, **characterized in that** it comprises a step (E85) of recording the result of said processings in a dashboard.

5. Method of management according to Claims 1 to 4, **characterized in that** said importance level of said first message is determined on the basis of the analysis of its content, of a characteristic of the sender, and/or of the number of first messages received in a predefined time interval originating from the sender.

6. Method of management according to any one of Claims 1 to 5, **characterized in that** the interruptibility level of the user is determined on the basis of one at least of the following parameters,
- a frequency of striking the keypad;
- characteristics of use of a mouse;
- a number of applications currently executing on the device of the user;
- the type of the program active in the foreground on the device of the user;
- a status of an instant messaging;
- the content of a diary.

7. Device for message management comprising,
- a module for intercepting a first message intended for the device of a user;
- a module for estimating a level termed "interruptibility level of the user" representing the extent to which said user can be interrupted in their current activity;
- a module for processing said first message as a function of said interruptibility level of the user;
- the management device being **characterized in that** the processing module is configured to determine that said user is interruptible or non interruptible as a function of the result of a comparison (E20) of said estimated interruptibility level with a first threshold, and to present said first message to said user if said user is considered to be interruptible;
- a module for estimating an importance level configured to estimate an importance level of said first message if said user is considered to be non interruptible
- a means of despatch, implemented if said user is considered to be non interruptible, configured to:
• despatch a response to the sender of said first message if said importance level of the first message is less than a second threshold, said response being dependent on the first message, and
• present said user (B) with the response (MSG2) in a second message, if the importance level of said first message is greater than the second threshold.

8. Computer program (PG) comprising instructions for the execution of the steps of the method of message management according to any one of Claims 1 to 6 when said program is executed by computer.

9. Recording medium (13) readable by a computer on which is recorded a computer program (PG) comprising instructions for the execution of the steps of the method of message management according to any one of Claims 1 to 6.
